# EUROPEAN PATENT APPLICATION

(11) **EP 3 490 281 A1**
(43) Date of publication of application: **29.05.2019**
(21) Application number: 17834088.1
(22) Date of filing: 18.07.2017
(51) Int. Cl.: H04W 8/22, H04W 92/14

(54) **BASE STATION, MOBILE STATION, CORE NETWORK DEVICE, COMMUNICATION METHOD, AND STORAGE MEDIUM WHICH STORES PROGRAM**

(30) Priority: 25.07.2016 JP 2016145115
(71) Applicant: NEC Corporation, Tokyo 108-8001 (JP)
(72) Inventor: TOKUNAGA Michita, Tokyo 108-8001 (JP)
(74) Representative: MacDougall, Alan John Shaw
(86) International application number: PCT/JP2017/025856
(87) International publication number: WO 2018/021080

(57) **Abstract**

A base station is configured to wirelessly communicate with a mobile station. The base station has a communication device configured to receive a message including at least one information element, before establishment of a Radio Resource Control (RRC) connection is completed. The base station has a processor configured to acquire ability information relating to the ability of the mobile station, on the basis of the at least one information element.

## Description

### [Technical Field]

The present invention relates to a base station, a mobile station, a core network device, a communication method, and a program.

### [Background Art]

In NPL 1, a User Equipment (UE) sends a UE Capability Information message to an evolved Node B (eNode B). A Mobility Management Entity (MME) further sends an S1 Application Protocol (S1AP): INITIAL CONTEXT SETUP REQUEST message to the eNode B. These messages include UE Capability.

### [Citation List]

### [Non Patent Literature]

[NPL 1] TS 36.300 (3GPP TS 36.300 V13.3.0 (2016-03), Evolved Universal Terrestrial Radio Access (E-UTRA) and Evolved Universal Terrestrial Radio Access Network (E-UTRAN); Overall description; Stage 2)

### [Summary of Invention]

### [Technical Problem]

However, since the above-mentioned message in NPL 1 is sent after establishment of a Radio Resource Control (RRC) connection is completed, the eNode B cannot recognize UE Capability before establishment of an RRC connection is completed.

It is one object of the exemplary example embodiments to provide a novel scheme for allowing a base station to recognize capability information of a mobile station before establishment of an RRC connection is completed. It should be noted that this object is merely one of a plurality of objects to be achieved by the example embodiments disclosed in the present specification. Other objects or problems and novel features will become apparent from the description of the present specification or the accompanying drawings.

### [Solution to Problem]

A base station, according to the exemplary example embodiment, is configured to perform wireless communication with a mobile station. The base station includes a communication device configured to receive a message including at least one information element, before establishment of a Radio Resource Control (RRC) connection is completed. The base station includes a processor configured to acquire capability information relating to capability of the mobile station, based on the at least one information element.

A mobile station, according to another exemplary example embodiment, is configured to perform wireless communication with a base station. The mobile station includes a processor configured to include capability information relating to capability of the mobile station as an information element of a message. The mobile station includes a communication device configured to send the message including the information element to the base station, before establishment of a Radio Resource Control (RRC) connection is completed.

A core network device, according to another exemplary example embodiment, is configured to be communicable with a base station. The core network device includes a processor configured to include capability information relating to capability of a mobile station as an information element of a message. The core network includes an interface configured to send the message including the information element to the base station, before establishment of a Radio Resource Control (RRC) connection is completed.

In a communication method according to another exemplary embodiment, a base station is configured to perform wireless communication with a mobile station. The communication method includes receiving a message including at least one information element, before establishment of a Radio Resource Control (RRC) connection is completed. The communication method includes acquiring capability information relating to capability of the mobile station, based on the at least one information element.

In a program according to another exemplary embodiment, a base station is configured to perform wireless communication with a mobile station. The program includes receiving a message including at least one information element, before establishment of a Radio Resource Control (RRC) connection is completed. The program includes acquiring capability information relating to capability of the mobile station, based on the at least one information element.

### [Advantageous Effects of Invention]

According to the exemplary example embodiments, a base station can recognize capability information of a mobile station before establishment of an RRC connection is completed.

### [Brief Description of Drawings]

Fig. 1 illustrates a mobile communication system in a first exemplary example embodiment.
Fig. 2 illustrates a network device in the first exemplary example embodiment.
Fig. 3 illustrates an operation in the first exemplary example embodiment.
Fig. 4 illustrates an operation in a second exemplary example embodiment.
Fig. 5 illustrates an operation in a third exemplary example embodiment.
Fig. 6 illustrates a technique related to the exemplary example embodiments.
Fig. 7 illustrates another technique related to the exemplary example embodiments.
Fig. 8 illustrates a base station in a fourth exemplary example embodiment.
Fig. 9 illustrates a mobile station in the fourth exemplary example embodiment.
Fig. 10 illustrates a core network device in the fourth exemplary example embodiment.

### [Example Embodiment]

Exemplary example embodiments will be described in detail below with reference to the drawings. In the respective drawings, the same reference numerals denote the same or equivalent components, and a repetitive description thereof will be omitted as needed, for the sake of descriptive clarity.

A plurality of exemplary example embodiments to be described hereinafter can be practiced independently or can be practiced in combination as appropriate.

### <First Exemplary Example Embodiment>

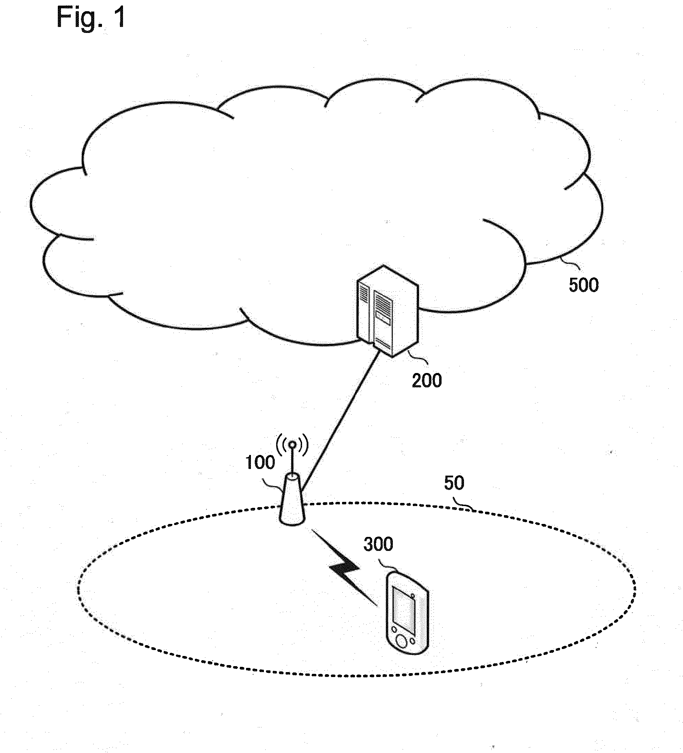

Fig. 1 illustrates a mobile communication system (to be also simply referred to as a communication system hereinafter) in a first exemplary example embodiment. The mobile communication system includes a mobile communication terminal device (User Equipment: UE) 300, a radio base station device (evolved Node B: eNode B) 100, a management device (Mobility Management Entity: MME) 200 which manages the Mobility of the mobile communication terminal device, and a core network 500. The eNode B 100 forms a cell 50.

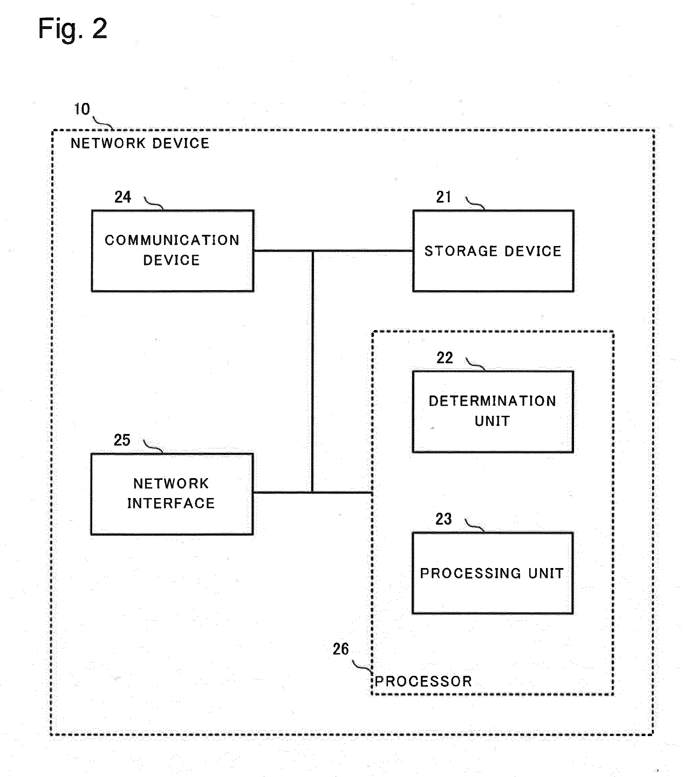

Fig. 2 illustrates a network device in the first exemplary example embodiment. A network device 10 corresponds to the eNode B 100 illustrated in Fig. 1. The network device 10 includes a storage device 21, a communication device 24, a network interface 25, and a processor 26. The processor 26 includes a determination unit 22 and a processing unit 23. Note that the eNode B 100 serves as a base station employing Long Term Evolution (LTE).

The communication device 24 is configured to receive a physical channel signal from the UE 300. Examples of physical channels include a Physical Uplink Control Channel (PUCCH) and a Physical Uplink Shared Channel (PUSCH).

The communication device 24 is further configured to send a physical channel signal to the UE 300. Examples of physical channels include a Physical Downlink Control Channel (PDCCH) and a Physical Downlink Shared Channel (PDSCH).

The communication device 24 is further configured to send and receive various messages of 3rd Generation Partnership Project (3GPP). The communication device 24 sends and receives, for example, a Radio Resource Control (RRC) protocol message transmitted through the PUSCH or the PDSCH.

The network interface 25 is configured to send and receive an S1 Application Protocol (S1AP) protocol message. The network interface 25 is further configured to exchange data between a Serving Gateway (SGW) or a Packet Data Network (PDN) Gateway (PGW) included in the core network 500.

The storage device 21 is configured to hold (store) UE capability information received by the communication device 24 or the network interface 25.

The determination unit 22 is configured to determine the capability of the UE, based on the information held in the storage device 21. The determination unit 22 is further configured to select a wireless scheme using the information held in the storage device 21 and wireless quality information received by the communication device 24.

The processing unit 23 is configured to generate a message to be sent by the communication device 24, based on the result of determination of the UE capability by the determination unit 22. The communication device 24 performs wireless sending and reception, based on the result of wireless scheme selection by the determination unit 22.

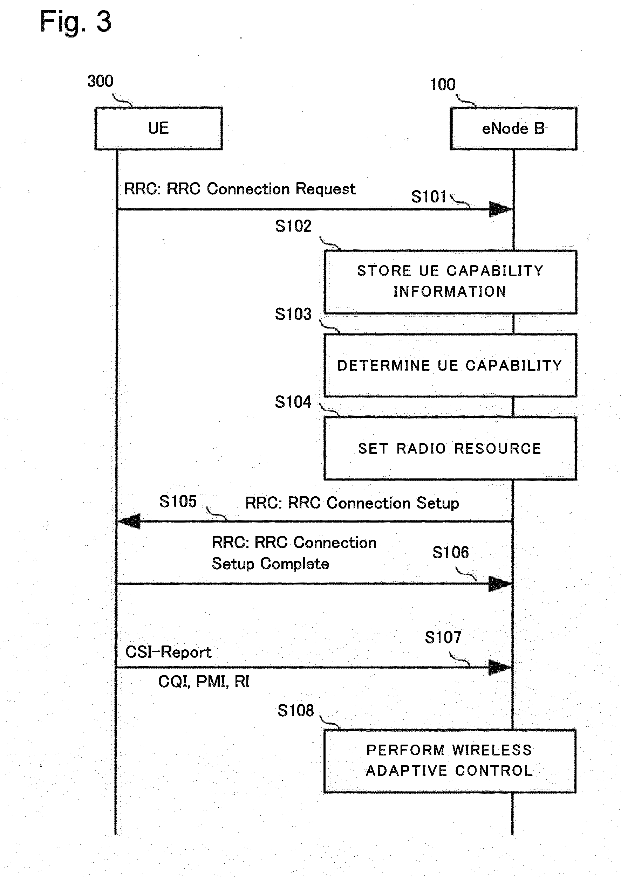

Fig. 3 illustrates an operation in the first exemplary example embodiment.

In S101, the UE 300 includes (sets) UE capability information in an RRC Connection Request message that is an RRC protocol message. The RRC Connection Request message is sent from the UE 300 to the eNode B 100.

Note that the UE capability information may include, for example, information indicating a Transmission Mode supported by the UE 300. Hence, the eNode B 100 can recognize the type of transmission mode supported by the UE 300.

The UE capability information may also be set as a new value in an establishment Cause that is an Information Element defined by standardization. The UE capability information may even be additionally set as a new Information Element.

In S102, when the communication device 24 of the eNode B 100 receives the RRC Connection Request message, the communication device 24 of the eNode B 100 extracts (acquires) UE capability information from the RRC Connection Request message. The storage device 21 is notified of the extracted UE capability information. The storage device 21 stores the UE capability information.

In S103, when the storage device 21 stores the UE capability information, the determination unit 22 determines the capability of the UE 300. The determination unit 22 determines, for example, whether the UE 300 supports Transmission Mode 7, 8, or 9 (support is available). When it is determined that support is available, the determination unit 22 notifies the processing unit 23 of information relating to the availability of support of Transmission Mode 7, 8, or 9.

In S104, the processing unit 23 sets a wireless parameter (setting information), based on the information relating to the availability of support received as a notification. S105 illustrates one exemplary operation when a notification indicating that support is available for Transmission Mode 7, Transmission Mode 8, or Transmission Mode 9 is sent.

In S105, the communication device 24 of the eNode B 100 sends an RRC Connection Setup message that is an RRC protocol message to the UE 300. "tm7," "tm8-v920," or "tm9-v1020" is set for transmissionMode or transmissionMode-r10 that is one Information Element included in the RRC Connection Setup message. After S105 is sent, Transmission Mode 7, Transmission Mode 8, or Transmission Mode 9 is applied to communication with the UE 300. Note that "tm7," "tm8-v920," and "tm9-v1020" represent Transmission Mode 7, Transmission Mode 8, and Transmission Mode 9, respectively. Note that only Transmission Mode 9 and preceding transmission modes are represented herein, "tm10-v1130" may be set for, for example, Transmission Mode 10. In Transmission Mode 11 and succeeding transmission modes, values according to the respective transmission modes can be set.

In S106, the UE 300, upon receiving the RRC Connection Setup message, sends an RRC Connection Setup Complete message for confirming completion of establishment of an RRC connection to the eNode B 100. After sending an RRC Connection Setup Complete message, the UE 300 performs communication in Transmission Mode 7, Transmission Mode 8, or Transmission Mode 9 by applying a wireless parameter indicated in the RRC Connection Setup message.

Note that an information element of "transmissionMode" and/or "transmissionMode-r10" may be included in the wireless parameter or may be included in the RRC Connection Setup message as an information element different from the wireless parameter.

In S107, the UE 300 measures the wireless quality in accordance with the set Transmission Mode. The UE 300 notifies the eNode B 100 of (sends to it) uplink control information, based on the measurement result, by a CSI-Report using the PUCCH or the PUSCH. The uplink control information includes channel state information. The channel state information includes, for example, at least one of a Precoding Matrix Indicator (PMI), a Channel Quality Indicator (CQI), and a Rank Indicator (RI).

In S108, the communication device 24 of the eNode B 100 receives the CSI-Report. In accordance with the wireless quality based on the received CSI-Report, the determination unit 22 performs, for example, transmission layer count and beam forming selection. The communication device 24 wirelessly communicates with the UE 300, based on the scheme or the parameter selected by the determination unit 22. The eNode B 100, for example, changes the information rate in accordance with the channel state information.

According to the exemplary example embodiment, since wireless communication according to the UE capability can be performed upon establishment of an RRC connection between the UE and the eNode B, it is unnecessary to change the wireless parameter after the establishment of the RRC connection. One reason is that, in wireless parameter setting upon establishment of an RRC connection, the UE notifies the eNode B of only necessary information upon the establishment of the RRC connection, without UE-EUTRA-Capability including unnecessary information as well.

Furthermore, the eNode B can perform wireless parameter setting according to the capability of the UE and receive from the UE, information concerning the wireless quality, based on the wireless parameter setting according to the capability of the UE after the establishment of the RRC connection.

### <Second Exemplary Example Embodiment>

In the first exemplary example embodiment, UE capability information used to determine a wireless parameter to be set in RRC Connection Setup is acquired from an RRC Connection Request message.

In the second exemplary example embodiment, UE capability information used to determine a wireless parameter is acquired from an MME 200 by an S1 Application Protocol (S1AP): Paging message which triggers a UE 300 to send an RRC Connection Request message.

The configuration of a network device 10 (eNode B 100) according to this example embodiment is similar to that illustrated in Fig. 2.

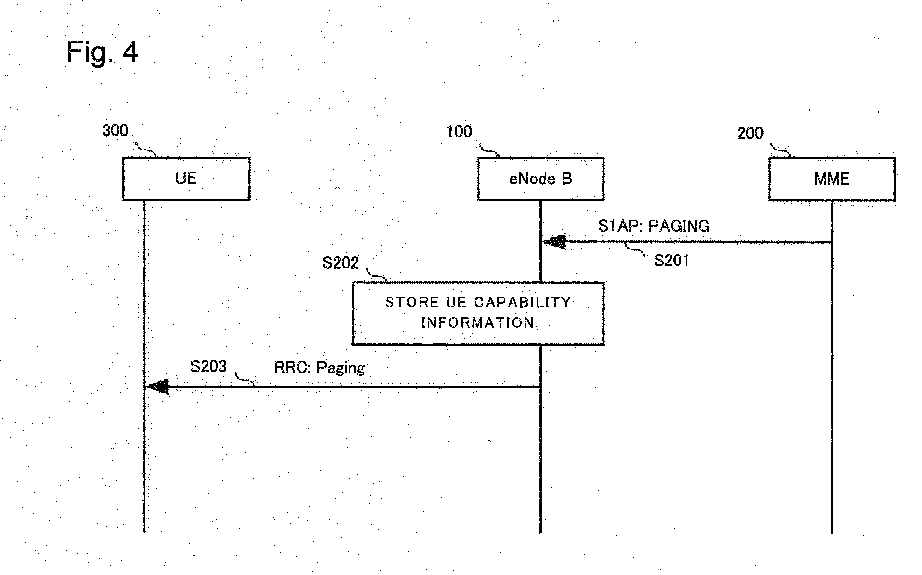

Fig. 4 illustrates an operation in the second exemplary example embodiment. In S201, the MME 200 sends an S1AP: Paging message that is an S1AP protocol message to the eNode B 100. The MME 200 includes, in the S1AP: Paging message, UE capability information and S-TMSI that is identification information for identifying the UE. Note that S-TMSI is an abbreviation for System Architecture Evolution (SAE) Temporary Mobile Subscriber Identity and is a UE identifier removed by the MME 200 in position registration of the UE 300. S-TMSI and UE capability information are sent as information elements included in the S1AP: Paging message.

In S202, a network interface 25 of the eNode B 100 receives Paging. S-TMSI and UE capability information included in the received message are stored in the storage device 21.

In S203, the eNode B 100 sends an RRC: Paging message to the UE 300.

After that, when the UE 300 tries to establish an RRC Connection in response to the Paging message, it sends an RRC: RRC Connection Request message to the eNode B 100. The message includes S-TMSI but includes no UE capability information.

When S-TMSI received by the eNode B 100 is identical to that stored in S202, the eNode B 100 can use UE capability information associated with this S-TMSI, in capability determination illustrated in Fig. 3.

According to the second exemplary example embodiment, the eNode B 100 can recognize UE capability information, based on information from the MME 200, without including the UE capability information in an RRC: RRC Connection Request message. Furthermore, an advantageous effect similar to that in the first exemplary example embodiment can be achieved without changing the specification of the RRC: RRC Connection Request message.

### <Third Exemplary Example Embodiment>

The configuration of a network device 10 (eNode B 100) according to a third example embodiment is similar to that illustrated in Fig. 2.

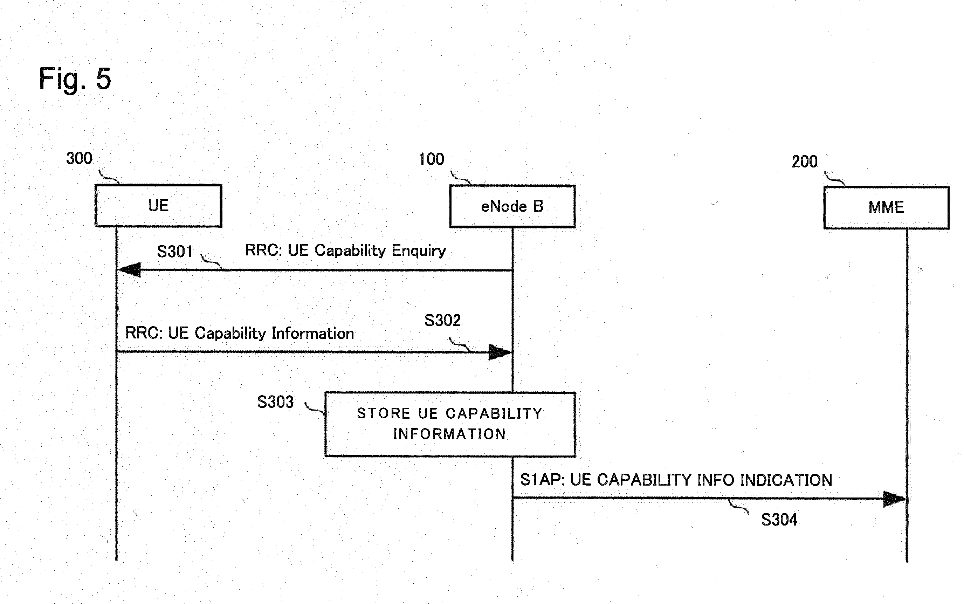

Fig. 5 illustrates an operation in the third exemplary example embodiment. In S301, the eNode B 100 sends to a UE 300, an RRC: UE Capability Enquiry that is a message for issuing a request to transfer a UE radio access capability parameter.

In S302, the UE 300 sends an RRC: UE Capability Information message to the eNode B 100. The UE Capability Information message includes UE-EUTRA-Capability information as an information element.

In S303, UE Capability Information is generated (acquired) from UE-EUTRA-Capability, and the generated UE Capability Information and S-TMSI for identifying the UE are associated with each other and stored.

An example relating to the availability of support of a Transmission Mode by the UE will be given herein.

When, for example, ue-SpecificRefSigsSupported that is an Information Element of UE-EUTRA-Capability is true, Transmission Mode 7 is determined to be supported by the UE 300, and this information is stored in a storage device 21 of the eNode B 100, together with S-TMSI.

In addition, when enhancedDualLayerFDD that is an Information Element is supported, Transmission Mode 8 is determined to be supported by the UE 300, and this information is stored in the storage device 21 of the eNode B 100, together with S-TMSI.

Moreover, when Index103 that is an Information Element is 1 in featureGroupIndRe110-v1060 of fdd-Add-UE-EUTRA-Capabilities-v1060, Transmission Mode 9 is determined to be supported by the UE 300, and this information is stored in the storage device 21 of the eNode B 100, together with S-TMSI.

In S304, the eNode B 100 sends an S1AP: UE CAPABILITY INFO INDICATION message to an MME 200. S1AP: UE CAPABILITY INFO INDICATION includes capability information of the UE.

Note that the information stored in S303 can be held in the storage device 21 of the eNode B 100 even after the RRC Connection is released.

By holding the above-mentioned information even after the RRC Connection is released (storing, for example, S-TMSI and UE capability information in association with each other as information concerning a terminal), as long as S-TMSI that is an Information Element is included upon establishment of the next RRC Connection, it can be used in UE capability determination of S103 in Fig. 3. Even in this example embodiment, a similar effect is obtained without including UE capability information in the RRC Connection Request message of S101.

A similar effect is obtained even by generating and storing UE capability information used to determine a wireless parameter to be set in RRC Connection Setup upon acquisition of UE-EUTRA-Capability.

### <Related Art>

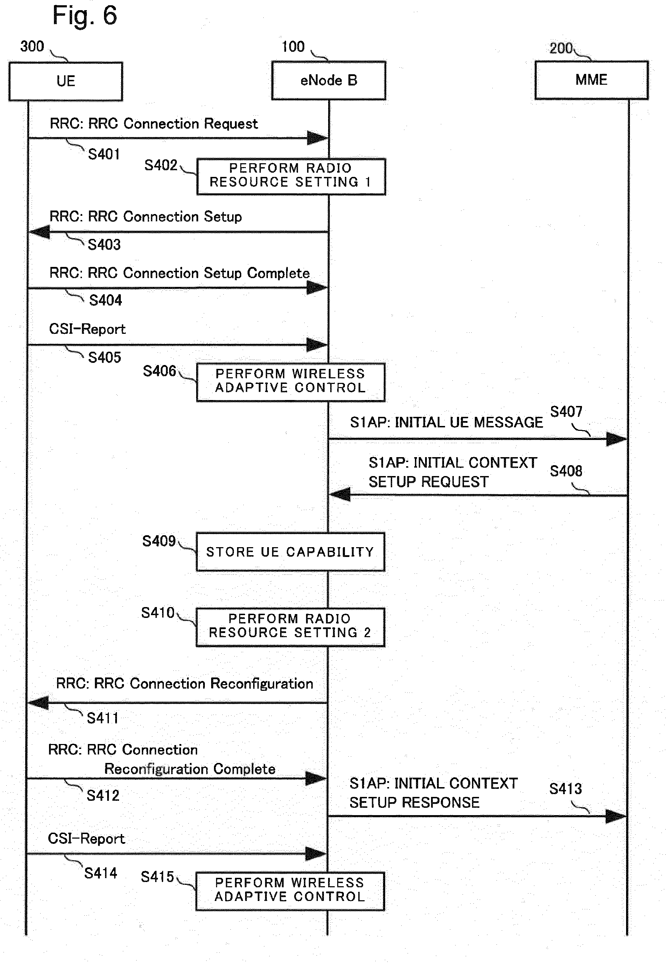

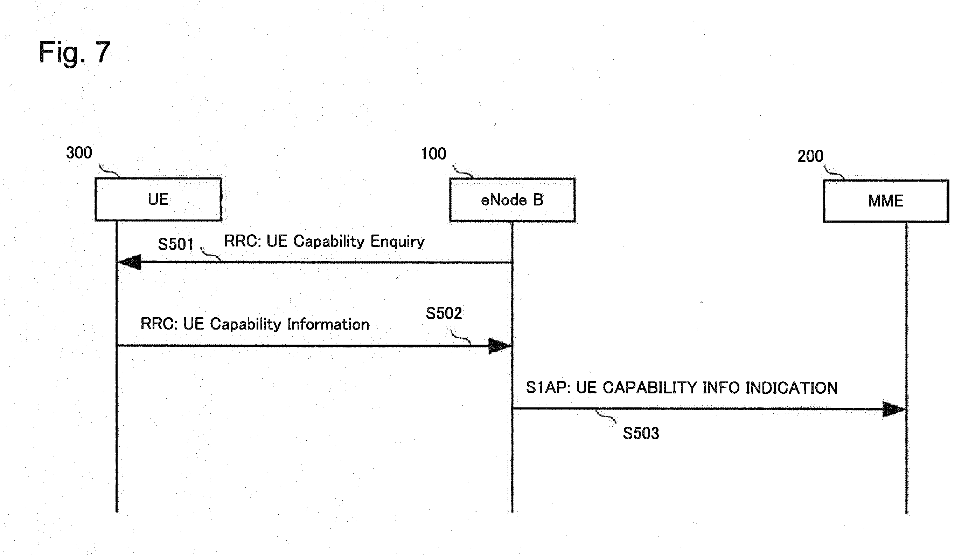

Figs. 6 and 7 illustrate techniques related to the exemplary example embodiments. No UE Capability is included in an RRC Connection Request message of S401 in Fig. 6. In S408, UE Capability is included in an S1AP: INITIAL CONTEXT SETUP REQUEST message sent to an eNode B 100 by an MME 200.

In S408, when no UE Capability notification is sent from the MME 200, an operation illustrated in Fig. 7 is performed subsequently to S408.

Referring to Fig. 7, the eNode B 100 receives a UE Capability notification (S502) by an RRC: UE Capability Information message from a UE 300, in response to an RRC: UE Capability Enquiry message (S501) sent to the UE 300.

In the above-mentioned two cases, since the eNode B 100 is notified of UE Capability after S408, UE Capability having not been sent cannot be used in radio resource setting (S402) for sending an RRC Connection Setup message of S403. In other words, the channel state information (CSI)-Report in S405 is a wireless quality report when no wireless parameter according to the capability of the UE has not been set. It is, therefore, impossible to perform, for example, layer count designation and beam forming with good radio use efficiency.

In this related art, when the UE 300 receives an RRC: RRC Connection Reconfiguration message in S411, a wireless parameter according to the UE capability information acquired in S408 or S502 is set. A wireless quality report based on this setting is conducted in the CSI-report of S414.

In this manner, the inventor of the present invention found that it may be a challenge to perform wireless communication using a scheme having a UE capability lower than an actual UE capability, until layer count designation and beam forming are performed with good radio use efficiency in S415. The inventor of the present invention also found that it may be another challenge to overcome a situation in which an eNode B cannot effectively use a radio band because information concerning the wireless quality based on wireless parameter setting according to the capability information of a UE cannot be received from the UE.

According to the scheme illustrated in the above-described exemplary example embodiments, UE capability information is sent in, for example, S401 that is the initial wireless parameter setting message. It is, therefore, possible to perform layer count designation and beam forming with good radio use efficiency in an early stage. The exemplary example embodiments can prevent adoption of a low-efficient scheme upon establishment of an RRC Connection, for a UE which can employ a high-efficient scheme in, for example, a Transmission Mode. It is also possible to prevent resetting of a wireless parameter by RRC Connection Reconfiguration after acquisition of UE-EUTRA-Capability, due to adoption of a low-efficiency scheme.

In this manner, the time until wireless parameter setting appropriate to the capability of the UE can be shortened. Furthermore, another wireless parameter setting procedure can be made less likely to occur.

### <Fourth Exemplary Example Embodiment>

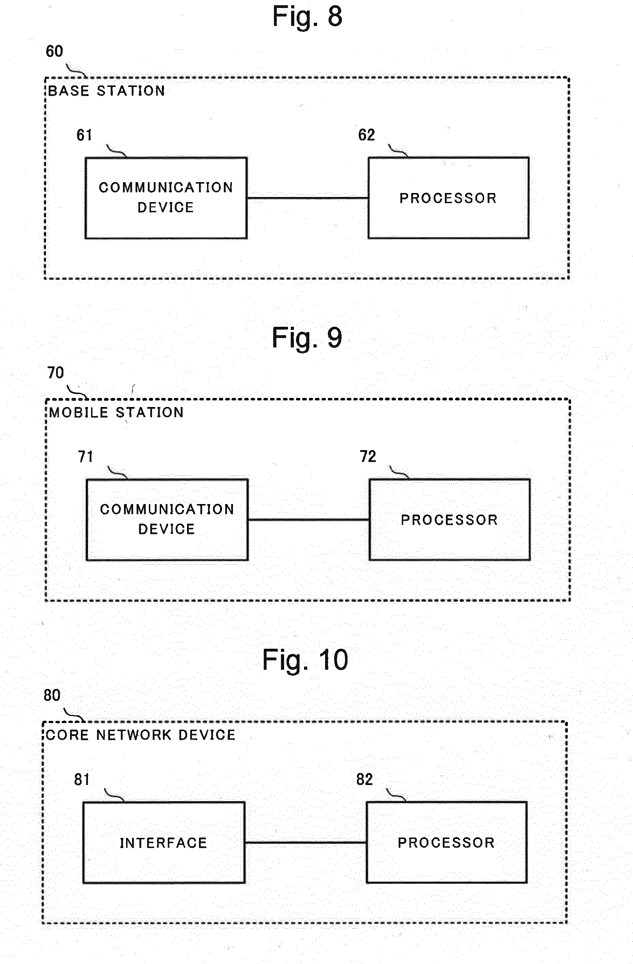

Fig. 8 illustrates a base station in a fourth exemplary example embodiment. A base station 60 is configured to wirelessly communicate with a mobile station. The base station 60 includes a communication device 61 and a processor 62. The communication device 61 is configured to receive a message including at least one information element, before establishment of a Radio Resource Control (RRC) connection is completed. The processor 62 is configured to acquire capability information relating to the capability of the mobile station, based on this at least one information element.

Fig. 9 illustrates a mobile station in the fourth exemplary example embodiment. A mobile station 70 is configured to wirelessly communicate with a base station. The mobile station 70 includes a communication device 71 and a processor 72. The processor 72 is configured to include capability information relating to the capability of the mobile station 70 as an information element of a message. The communication device 71 is configured to send the message including the information element to the base station, before establishment of a Radio Resource Control (RRC) connection is completed.

Fig. 10 illustrates a core network device in the fourth exemplary example embodiment. A core network device 80 is configured to be communicable with a base station. The core network device 80 includes an interface 81 and a processor 82. The processor 82 is configured to include capability information relating to the capability of a mobile station as an information element of a message. The interface 81 is configured to send the message including the information element to the base station, before establishment of a Radio Resource Control (RRC) connection is completed.

According to this example embodiment, a base station can recognize capability information of a mobile station before establishment of an RRC connection is completed.

### <Other Exemplary Example Embodiments>

The above-mentioned storage device 21, determination unit 22, processing unit 23, communication device 24, network interface 25, processor 26, communication device 61, processor 62, communication device 71, processor 72, interface 81, and processor 82 may be implemented as software or hardware.

In addition, the respective units may be implemented as different pieces of software or hardware, or some or all of them may be implemented as the same software or hardware.

Moreover, the respective units may be implemented as part of software or hardware implementing other functions of the network device.

An LTE wireless communication system has been taken as an example in the above-described example embodiments, but at least some of methods and devices in various example embodiments are applicable to a wide range of communication systems including a variety of non-LTE and/or non-cellular systems. The above-described example embodiments may be practiced in, for example, the Universal Mobile Telecommunications System (UMTS) scheme. The above-described example embodiments are even applicable to, for example, LTE-Advanced or LTE-Advanced Pro.

A computer program (to be referred to as a program hereinafter) describing processing details as a procedure may even be recorded on a recording medium readable in each element constituting the communication system, and the program recorded on the recording medium may be read and executed by each element constituting the communication system.

The program recorded on the recording medium is read by a Central Processing Unit (CPU) provided in each element constituting the communication system, and processing similar to the above-described one is performed under the control of the CPU. Note that the CPU operates as a computer which executes the program read from the recording medium recording the program.

In the above-mentioned example, the program is stored using a variety of non-transitory computer readable media and can be supplied to the computer. The non-transitory computer readable media include a variety of tangible storage media. Examples of the non-transitory computer readable media include magnetic recording media (for example, a flexible disk, a magnetic tape, and a hard disk drive), magnetooptical recording media (for example, a magnetooptical disk), a Compact Disc (CD)- Read Only Memory (ROM), a Compact Disc Recordable (CD-R), a Compact Disc Rewritable (CD-R/W), a Digital Versatile Disc (DVD®), and semiconductor memories (for example, a mask ROM, a Programmable ROM (PROM), an Erasable PROM (EPROM), a flash ROM, and a Random Access Memory (RAM)). The program may also be supplied to the computer using a variety of transitory computer readable media. Examples of the transitory computer readable media include electrical signals, optical signals, and electromagnetic waves. The transitory computer readable media can supply the program to the computer via wired communication paths such as electrical wires and optical fibers or wireless communication paths.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

### <Supplementary Notes>

A part or all of the above-described exemplary example embodiments may be described as in the following supplementary notes. However, each of the following supplementary notes are merely illustrative of the present invention, and the present invention is not limited to these cases alone.

### <Supplementary Note 1>

A base station configured to perform wireless communication with a mobile station, the base station comprising:
a communication device configured to receive a message including at least one information element, before establishment of a Radio Resource Control (RRC) connection is completed; and
a processor configured to acquire capability information relating to capability of the mobile station, based on the at least one information element.

### <Supplementary Note 2>

The base station according to Supplementary note 1, wherein the capability information comprises information indicating a transmission mode of the mobile station.

### <Supplementary Note 3>

The base station according to Supplementary note 1 or 2, wherein the message comprises an RRC Connection Request message sent by the mobile station.

### <Supplementary Note 4>

The base station according to Supplementary note 1 or 2, wherein the message comprises a PAGING message sent by a core network device which communicates with the base station.

### <Supplementary Note 5>

The base station according to Supplementary note 4, wherein the at least one information element included in the PAGING message comprises the capability information, and identification information for identifying the mobile station.

### <Supplementary Note 6>

The base station according to Supplementary note 1 or 2, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

### <Supplementary Note 7>

The base station according to any one of Supplementary notes 1 to 6, further comprising: a storage device configured to hold the capability information upon the establishment of the RRC connection.

### <Supplementary Note 8>

The base station according to Supplementary note 7, wherein the storage device holds the capability information even after the RRC connection is released.

### <Supplementary Note 9>

The base station according to any one of Supplementary notes 1 to 8, wherein
the processor determines a wireless parameter for the wireless communication, based on the capability information, upon the establishment of the RRC connection, and
the communication device sends the wireless parameter to the mobile station.

### <Supplementary Note 10>

A mobile station configured to perform wireless communication with a base station, the mobile station comprising:
a processor configured to include capability information relating to capability of the mobile station as an information element of a message; and
a communication device configured to send the message including the information element to the base station, before establishment of a Radio Resource Control (RRC) connection is completed.

### <Supplementary Note 11>

The mobile station according to Supplementary note 10, wherein the capability information comprises information indicating a transmission mode of the mobile station.

### <Supplementary Note 12>

The mobile station according to Supplementary note 10 or 11, wherein the message comprises an RRC Connection Request message sent by the mobile station.

### <Supplementary Note 13>

The mobile station according to Supplementary note 10 or 11, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

### <Supplementary Note 14>

The mobile station according to any one of Supplementary notes 10 to 13, wherein
a wireless parameter for the wireless communication is determined based on the capability information upon the establishment of the RRC connection, and
the communication device receives the determined wireless parameter from the base station.

### <Supplementary Note 15>

A core network device configured to be communicable with a base station, the core network device comprising:
a processor configured to include capability information relating to capability of a mobile station as an information element of a message; and
an interface configured to send the message including the information element to the base station, before establishment of a Radio Resource Control (RRC) connection is completed.

### <Supplementary Note 16>

The core network device according to Supplementary note 15, wherein the capability information comprises information indicating a transmission mode of the mobile station.

### <Supplementary Note 17>

The core network device according to Supplementary note 15 or 16, wherein the message comprises a PAGING message sent by the core network device.

### <Supplementary Note 18>

The core network device according to Supplementary note 17, wherein the at least one information element included in the PAGING message comprises the capability information, and identification information for identifying the mobile station.

### <Supplementary Note 19>

A communication system comprising:
a mobile station; and
a base station which performs wireless communication with the mobile station,
wherein the base station
receives a message including at least one information element, before establishment of a Radio Resource Control (RRC) connection is completed, and
acquires capability information relating to capability of the mobile station, based on the at least one information element.

### <Supplementary Note 20>

The communication system according to Supplementary note 19, wherein the capability information comprises information indicating a transmission mode of the mobile station.

### <Supplementary Note 21>

The communication system according to Supplementary note 19 or 20, wherein the message comprises an RRC Connection Request message sent by the mobile station.

### <Supplementary Note 22>

The communication system according to Supplementary note 19 or 20, wherein the message comprises a PAGING message sent by a core network device which communicates with the base station.

### <Supplementary Note 23>

The communication system according to Supplementary note 22, wherein the at least one information element included in the PAGING message comprises the capability information, and identification information for identifying the mobile station.

### <Supplementary Note 24>

The communication system according to Supplementary note 19 or 20, wherein
the message comprises a UE Capability Information message sent from the mobile station and relating to a previous RRC connection released before the RRC connection is established, and
the base station determines a wireless parameter for the wireless communication, based on the capability information included in the UE Capability Information message, upon the establishment of the RRC connection.

### <Supplementary Note 25>

The communication system according to any one of Supplementary notes 19 to 24, wherein the base station holds the capability information upon the establishment of the RRC connection.

### <Supplementary Note 26>

The communication system according to Supplementary note 25, wherein the base station holds the capability information even after the RRC connection is released.

### <Supplementary Note 27>

The communication system according to any one of Supplementary notes 19 to 26, wherein the base station
determines a wireless parameter for the wireless communication, based on the capability information, upon the establishment of the RRC connection, and
sends the wireless parameter to the mobile station.

### <Supplementary Note 28>

A communication method for a base station configured to perform wireless communication with a mobile station, the method comprising:
receiving a message including at least one information element, before establishment of a Radio Resource Control (RRC) connection is completed; and
acquiring capability information relating to capability of the mobile station, based on the at least one information element.

### <Supplementary Note 29>

The communication method according to Supplementary note 28, wherein the capability information comprises information indicating a transmission mode of the mobile station.

### <Supplementary Note 30>

The communication method according to Supplementary note 28 or 29, wherein the message comprises an RRC Connection Request message sent by the mobile station.

### <Supplementary Note 31>

The communication method according to Supplementary note 28 or 29, wherein the message comprises a PAGING message sent by a core network device which communicates with the base station.

### <Supplementary Note 32>

The communication method according to Supplementary note 31, wherein the at least one information element included in the PAGING message comprises the capability information, and identification information for identifying the mobile station.

### <Supplementary Note 33>

The communication method according to Supplementary note 28 or 29, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

### <Supplementary Note 34>

The communication method according to any one of Supplementary notes 28 to 33, wherein the capability information is held upon the establishment of the RRC connection.

### <Supplementary Note 35>

The communication method according to Supplementary note 34, wherein the capability information is held even after the RRC connection is released.

### <Supplementary Note 36>

The communication method according to any one of Supplementary notes 28 to 35, wherein
a wireless parameter for the wireless communication is determined based on the capability information upon the establishment of the RRC connection, and
the wireless parameter is sent to the mobile station.

### <Supplementary Note 37>

A storage medium storing a program for a base station configured to perform wireless communication with a mobile station, the program causing a computer to execute:
receiving a message including at least one information element, before establishment of a Radio Resource Control (RRC) connection is completed; and
acquiring capability information relating to capability of the mobile station, based on the at least one information element.

### <Supplementary Note 38>

The storage medium storing a program according to Supplementary note 37, wherein the capability information comprises information indicating a transmission mode of the mobile station.

### <Supplementary Note 39>

The storage medium storing a program according to Supplementary note 37 or 38, wherein the message comprises an RRC Connection Request message sent by the mobile station.

### <Supplementary Note 40>

The storage medium storing a program according to Supplementary note 37 or 38, wherein the message comprises a PAGING message sent by a core network device which communicates with the base station.

### <Supplementary Note 41>

The storage medium storing a program according to Supplementary note 40, wherein the at least one information element included in the PAGING message comprises the capability information, and identification information for identifying the mobile station.

### <Supplementary Note 42>

The storage medium storing a program according to Supplementary note 37 or 38, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

### <Supplementary Note 43>

The storage medium storing a program according to any one of Supplementary notes 37 to 42, wherein the capability information is held upon the establishment of the RRC connection.

### <Supplementary Note 44>

The storage medium storing a program according to Supplementary note 43, wherein the capability information is held even after the RRC connection is released.

### <Supplementary Note 45>

The storage medium storing a program according to any one of Supplementary notes 37 to 44, wherein
a wireless parameter for the wireless communication is determined based on the capability information upon the establishment of the RRC connection, and
the wireless parameter is sent to the mobile station.

This application is based upon and claims the benefit of priority from Japanese patent application No. 2016-145115, filed on July 25, 2016, the disclosure of which is incorporated herein in its entirety by reference.

### [Reference Signs List]

- 10: network device
- 21: storage device
- 22: determination unit
- 23: processing unit
- 24: communication device
- 25: network interface
- 26: processor
- 50: cell
- 60: base station
- 61: communication device
- 62: processor
- 70: mobile station
- 71: communication device
- 72: processor
- 80: core network device
- 81: interface
- 82: processor
- 100: eNode B
- 200: MME
- 300: UE
- 500: core network

## Claims

1. A base station configured to perform wireless communication with a mobile station, the base station comprising:
a communication device configured to receive a message including at least one information element, before establishment of a Radio Resource Control (RRC) connection is completed; and
a processor configured to acquire capability information relating to capability of the mobile station, based on the at least one information element.

2. The base station according to claim 1, wherein the capability information comprises information indicating a transmission mode of the mobile station.

3. The base station according to claim 1 or 2, wherein the message comprises an RRC Connection Request message sent by the mobile station.

4. The base station according to claim 1 or 2, wherein the message comprises a PAGING message sent by a core network device which communicates with the base station.

5. The base station according to claim 4, wherein the at least one information element included in the PAGING message comprises the capability information, and identification information for identifying the mobile station.

6. The base station according to claim 1 or 2, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

7. The base station according to any one of claims 1 to 6, further comprising: a storage device configured to hold the capability information upon the establishment of the RRC connection.

8. The base station according to claim 7, wherein the storage device holds the capability information even after the RRC connection is released.

9. The base station according to any one of claims 1 to 8, wherein
the processor determines a wireless parameter for the wireless communication, based on the capability information, upon the establishment of the RRC connection, and
the communication device sends the wireless parameter to the mobile station.

10. A mobile station configured to perform wireless communication with a base station, the mobile station comprising:
a processor configured to include capability information relating to capability of the mobile station as an information element of a message; and
a communication device configured to send the message including the information element to the base station, before establishment of a Radio Resource Control (RRC) connection is completed.

11. The mobile station according to claim 10, wherein the capability information comprises information indicating a transmission mode of the mobile station.

12. The mobile station according to claim 10 or 11, wherein the message comprises an RRC Connection Request message sent by the mobile station.

13. The mobile station according to claim 10 or 11, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

14. The mobile station according to any one of claims 10 to 13, wherein
a wireless parameter for the wireless communication is determined based on the capability information upon the establishment of the RRC connection, and
the communication device receives the determined wireless parameter from the base station.

15. A core network device configured to be communicable with a base station, the core network device comprising:
a processor configured to include capability information relating to capability of a mobile station as an information element of a message; and
an interface configured to send the message including the information element to the base station, before establishment of a Radio Resource Control (RRC) connection is completed.

16. The core network device according to claim 15, wherein the capability information comprises information indicating a transmission mode of the mobile station.

17. The core network device according to claim 15 or 16, wherein the message comprises a PAGING message sent by the core network device.

18. The core network device according to claim 17, wherein the at least one information element included in the PAGING message comprises the capability information, and identification information for identifying the mobile station.

19. A communication system comprising:
a mobile station; and
a base station which performs wireless communication with the mobile station,
wherein the base station
receives a message including at least one information element, before establishment of a Radio Resource Control (RRC) connection is completed, and
acquires capability information relating to capability of the mobile station, based on the at least one information element.

20. The communication system according to claim 19, wherein the capability information comprises information indicating a transmission mode of the mobile station.

21. The communication system according to claim 19 or 20, wherein the message comprises an RRC Connection Request message sent by the mobile station.

22. The communication system according to claim 19 or 20, wherein the message comprises a PAGING message sent by a core network device which communicates with the base station.

23. The communication system according to claim 22, wherein the at least one information element included in the PAGING message comprises the capability information, and identification information for identifying the mobile station.

24. The communication system according to claim 19 or 20, wherein
the message comprises a UE Capability Information message sent from the mobile station and relating to a previous RRC connection released before the RRC connection is established, and
the base station determines a wireless parameter for the wireless communication, based on the capability information included in the UE Capability Information message, upon the establishment of the RRC connection.

25. The communication system according to any one of claims 19 to 24, wherein the base station holds the capability information upon the establishment of the RRC connection.

26. The communication system according to claim 25, wherein the base station holds the capability information even after the RRC connection is released.

27. The communication system according to any one of claims 19 to 26, wherein the base station
determines a wireless parameter for the wireless communication, based on the capability information, upon the establishment of the RRC connection, and
sends the wireless parameter to the mobile station.

28. A communication method for a base station configured to perform wireless communication with a mobile station, the method comprising:
receiving a message including at least one information element, before establishment of a Radio Resource Control (RRC) connection is completed; and
acquiring capability information relating to capability of the mobile station, based on the at least one information element.

29. The communication method according to claim 28, wherein the capability information comprises information indicating a transmission mode of the mobile station.

30. The communication method according to claim 28 or 29, wherein the message comprises an RRC Connection Request message sent by the mobile station.

31. The communication method according to claim 28 or 29, wherein the message comprises a PAGING message sent by a core network device which communicates with the base station.

32. The communication method according to claim 31, wherein the at least one information element included in the PAGING message comprises the capability information, and identification information for identifying the mobile station.

33. The communication method according to claim 28 or 29, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

34. The communication method according to any one of claims 28 to 33, wherein the capability information is held upon the establishment of the RRC connection.

35. The communication method according to claim 34, wherein the capability information is held even after the RRC connection is released.

36. The communication method according to any one of claims 28 to 35, wherein
a wireless parameter for the wireless communication is determined based on the capability information upon the establishment of the RRC connection, and
the wireless parameter is sent to the mobile station.

37. A storage medium storing a program for a base station configured to perform wireless communication with a mobile station, the program causing a computer to execute:
receiving a message including at least one information element, before establishment of a Radio Resource Control (RRC) connection is completed; and
acquiring capability information relating to capability of the mobile station, based on the at least one information element.

38. The storage medium storing a program according to claim 37, wherein the capability information comprises information indicating a transmission mode of the mobile station.

39. The storage medium storing a program according to claim 37 or 38, wherein the message comprises an RRC Connection Request message sent by the mobile station.

40. The storage medium storing a program according to claim 37 or 38, wherein the message comprises a PAGING message sent by a core network device which communicates with the base station.

41. The storage medium storing a program according to claim 40, wherein the at least one information element included in the PAGING message comprises the capability information, and identification information for identifying the mobile station.

42. The storage medium storing a program according to claim 37 or 38, wherein
the message comprises a UE Capability Information message sent from the mobile station and relating to a previous RRC connection released before the RRC connection is established, and
a wireless parameter for the wireless communication is determined based on the capability information included in the UE Capability Information message, upon the establishment of the RRC connection.

43. The storage medium storing a program according to any one of claims 37 to 42, wherein the capability information is held upon the establishment of the RRC connection.

44. The storage medium storing a program according to claim 43, wherein the capability information is held even after the RRC connection is released.

45. The storage medium storing a program according to any one of claims 37 to 44, wherein
a wireless parameter for the wireless communication is determined based on the capability information upon the establishment of the RRC connection, and
the wireless parameter is sent to the mobile station.
